# EUROPÄISCHE PATENTANMELDUNG

(11) **EP 1 320 247 A1**
(43) Veröffentlichungstag der Anmeldung: **18.06.2003**
(21) Anmeldenummer: 01129648.0
(22) Anmeldetag: 12.12.2001
(51) Int. Cl.: H04M 3/53

(54) **Verfahren und Telekommunikationssystem zum Senden und Empfangen von Kurznachrichten bei ISDN-Endgeräten**

(71) Anmelder: SIEMENS AKTIENGESELLSCHAFT, 80333 München (DE)
(72) Erfinder: Szabo, Barno, 2000 Stockerau (AT)

(57) **Zusammenfassung**

Die Erfindung betrifft ein Telekommunikationssystem sowie ein Verfahren zur Übermittlung einer Nachricht von einem ersten zu einem zweiten Telekommunikations-Endgerät, von denen zumindest eines an ein leitungsgebundenes Telekommunikationsnetz (PSTN) angeschlossen und als ISDN-Endgerät (CDI) ausgebildet ist, mit zumindest einem Short-Message-Dienstzentrum (SMSS) zur Übermittlung bzw. Entgegennahme von Kurznachrichten von einem bzw. zu einem an das Kommunikationsnetz (PSTN) angeschlossenen Endgerät (CDI). Erfindungsgemäß wird die mit einem Telekommunikations-Endgerät als Kurznachricht eingegebene Nachricht in Daten verpackt, welche zwischen dem Short-Message-Dienstzentrum (SMSS) und dem ISDN-Endgerät mittels D-Kanal-Signalisierung übertragen werden.

## Beschreibung

Die Erfindung betrifft ein Verfahren zur Übermittlung einer Nachricht von einem ersten zu einem zweiten Telekommunikations-Endgerät, von denen zumindest eines an ein leitungsgebundenes Telekommunikationsnetz angeschlossen und als ISDN-Endgerät ausgebildet ist.

Weiters betrifft die Erfindung ein Telekommunikationssystem zur Übermittlung einer Nachricht von einem ersten zu einem zweiten Telekommunikations-Endgerät, von denen zumindest eines an ein leitungsgebundenes Telekommunikationsnetz angeschlossen und als ISDN-Endgerät ausgebildet ist, mit zumindest einem Short-Message-Dienstzentrum zur Übermittlung bzw. Entgegennahme von Kurznachrichten von einem bzw. zu einem an das Kommunikationsnetz angeschlossenen Endgerät.

Schließlich betrifft die Erfindung noch ein ISDN-Endgerät zur Verwendung in einem oben genannten Verfahren bzw. in einem oben genannten Telekommunikationssystem.

In nach dem GSM-Standard arbeitenden Mobilfunknetzen hat sich neben der dominierenden Sprachkommunikation die Kommunikation mittels sogenannter Kurznachrichten ("Short Messages") auf der Grundlage des hierfür geschaffenen Standards äußerst erfolgreich etabliert. Einerseits bietet die Übermittlung von Kurznachrichten per SMS ("Short Message Service") in bestimmten Situationen erhebliche Kostenvorteile, andererseits weist diese Art der Kommunikation in vielen Fällen auch noch den Vorteil auf, dass das Empfangen und Absenden von Kurznachrichten ohne akustische Belästigung für die Umgebung realisierbar ist. Außerdem sind mittels Kurznachrichten auch zusätzliche Ausdrucks- und psychologische Akzentuierungsmöglichkeiten gegeben.

Bei SMS handelt es sich um einen Punkt-zu-Punkt-Kurznachrichtendienst, der im Rahmen der GSM-Protokollarchitektur auf der Signalisierungsebene realisiert wird. Er umfasst den Transport paketorientierter Nutzdaten von und zu Mobilstationen. Die Kurznachrichten werden stets über ein Short-Message-Dienstzentrum (SM SC = "Short Message Service Center") im Store-and-Forward-Betrieb transportiert. Das Dienstzentrum nimmt die maximal 160 Zeichen langen Kurznachrichten von einer Mobilstation als Telekommunikations-Endgerät entgegen und leitet sie an ein zweites Telekommunikations-Endgerät - eine weitere Mobilstation oder auch ein Faxgerät o.ä. - weiter.

Zur Realisierung eines Dienstes definiert der GSM-Standard eine spezielle Protokollarchitektur. Diese ist in den ETSI-Spezifikationen festgelegt und wird in der Literatur hinriechend beschrieben (vgl. etwa J. Eberspächer, H. J. Vögel: "GSM Global System for mobile communication", Stuttgart, 1997), sodass eine genauere Beschreibung hier nicht notwendig ist.

In den bestehenden öffentlichen leitungsgebundenen Telefonnetzen ist eine derartige Übertragung von Kurznachrichten zwischen normalen Telekommunikations-Einrichtungen (z.B. Telefonen) derzeit nicht möglich.

Es existieren bereits Lösungen zur Übermittlung von Kurznachrichten von oder zu einem Festnetztelefon. Diese basieren auf analoger Signalisierung, im speziellen auf der DTMF-Signalisierung. Bei anderen Lösungen werden die Kurznachrichten über IP-Signalisierung ("Internet Protokoll") übertragen.

Allerdings eignen sich alle diese Lösungen zur Übermittlung von Kurznachrichten an oder zur Aussendung von Kurznachrichten durch ein Festnetztelefon für die Mehrzahl von ISDN-Endgeräten nicht. Natürlich besteht aber auch für solche Endgeräte das Bedürfnis, Kurznachrichten auszusenden und zu empfangen.

Es ist daher eine Aufgabe der Erfindung, ein Verfahren sowie ein Telekommunikationssystem anzugeben, mit dem das Aussenden bzw. Empfangen von Kurznachrichten für ISDN-Festnetzendgeräte möglich wird.

Diese Aufgabe wird mit einem eingangs erwähnten Verfahren dadurch gelöst, dass erfindungsgemäß
a) die Nachricht mit einem ersten Telekommunikations-Endgerät als Kurznachricht eingegeben wird,
b) über D-Kanal-Signalisierung Daten an ein Short-Message-Dienstzentrum übertragen werden, wobei die Daten zumindest die Kurznachricht enthalten,
c) von dem Short-Message-Dienstzentrum die mittels D-Kanal-Signalisierung übertragenen Daten entgegengenommen und zumindest die Kurznachricht an ein zweites Telekommunikations-Endgerät übertragen wird, und
d) die vom Short-Message-Dienstzentrum erhaltene Kurznachricht im zweiten Telekommunikations-Endgerät in ein Ausgabeformat umgesetzt wird und, insbesondere auf einer Anzeigeeinheit, ausgegeben wird.

Somit wird es auch für den Großteil der ISDN-Geräte möglich, nämlich jene, die auf der D-Kanal-Signalisierung basieren, Kurznachrichten zu empfangen bzw. auszusenden.

Zweckmäßigerweise wird dabei die Übertragung in Schritt c) unter Verwendung der Schicht 3 des D-Kanal-Protokolls durchgeführt.

Damit die Kommunikationspartner ISDN-Endgerät und Short-Message-Dienstzentrum erkennen, dass es sich bei den Daten um solche handelt, die eine Kurznachricht enthalten, werden die Daten (proprietär) kodiert und anschließend an das Short-Message-Dienstzentrum bzw. zwischen dem Dienstzentrum und dem ISDN-Endgerät übertragen.

Weiters ist es günstig, wenn die Kurznachricht mittels des Zentralzeichenkanal-Signalisierungssystems Nr. 7 an ein Endgerät übermittelt wird. Damit die Kurznachricht auch mobilen Endgeräten gesendet werden kann, ist es weiters zweckmäßig, wenn das Signalisierungssystem Nr. 7 um einen Mobilfunkanwendungsanteil (*Mobile Application Part,* MAP) erweitert ist, sodass die Kurznachricht an ein dem empfangenden Endgerät zugeordnetes Short-Message-Dienstzentrum übermittelt werden kann. Auf diese Signalisierungsweise werden die SMS-Informationen zwischen den Vermittlungsstellen transportiert.

Besonders einfach gestaltet sich die Realisierung der Erfindung, wenn die Daten vor Schritt b) in ISDN-spezifische Meldungen gepackt werden und anschließend an das Short-Message-Dienstzentrum übermittelt werden, da auf diese Weise auf die bestehende ISDN-Infrastruktur zurückgegriffen werden kann.

Bei einer weiteren Ausführungsform der Erfindung wird die Kurznachricht in Schritt a) mittels eines ISDN-Endgerätes eingegeben, vor Schritt b) die Kurznachricht mittels des ISDN-Endgerätes in ein SMS-Format gebracht, anschließend in eine ISDN-spezifische Meldung eingepackt, wobei die in Schritt b) an das Short-Message-Dienstzentrum übertragenen Daten zumindest die ISDN-Meldung enthalten.

Das Short-Message-Dienstzentrum erkennt an Hand der vereinbarten Protokolle, dass es sich um eine Kurznachricht aus dem Festnetz handelt, entpackt diese aus der Meldung, und sendet dann diese beispielsweise mittels SS7-Signalsierung an das gewünschte Ziel weiter.

Besonders zweckmäßig ist die Verwendung von FACILITY-Meldungen oder USER INFORMATION-Meldungen.

Weiters wird die genannte Aufgabe mit einem eingangs erwähnten Telekommunikationssystem dadurch gelöst, dass erfindungsgemäß die mit einem Telekommunikations-Endgerät als Kurznachricht eingegebene Nachricht in Daten verpackt wird, welche zwischen dem Short-Message-Dienstzentrum und dem ISDN-Endgerät mittels D-Kanal-Signalisierung übertragen werden.

Beispielsweise wird dabei eine auf einem ISDN-Endgerät eingegebene Kurznachricht an das zugeordnete Short-Message-Dienstzentrum wie oben beschrieben übermittelt, es ist aber auch möglich, dass eine von einem anderen Endgerät, etwa einem Mobilfunkgerät stammende, für das ISDN-Endgerät bestimmte Kurznachricht an das Short-Message-Dienstzentrum übermittelt und von diesem dann erfindungsgemäß an das ISDN-Endgerät weitergeleitet wird.

Bei einer ersten Ausführungsform der Erfindung ist das ISDN-Endgerät dazu eingerichtet, die die Kurznachricht enthaltenden Daten an das Short-Message-Dienstzentrum mittels D-Kanal-Signalisierung zu übermitteln, das Short-Message-Dienstzentrum ist dazu eingerichtet, die Daten entgegenzunehmen, die Kurznachricht aus den Daten zu extrahieren und an ein zweites Telekommunikations-Endgerät zu übertragen, wo die vom Short-Message-Dienstzentrum erhaltene Kurznachricht in ein Ausgabeformat umgesetzt wird und, insbesondere auf einer Anzeigeeinheit, ausgegeben wird. Auf diese Weise wird es auch mit ISDN-Endgräten möglich, Kurznachrichten an einen Empfänger zu übermitteln.

Damit von einem solchen ISDN-Endgerät auch Kurznachrichten empfangen werden können, ist das Short-Message-Dienstzentrum dazu eingerichtet, die die Kurznachricht enthaltenden Daten an das ISDN-Endgerät zu übermitteln, und das ISDN-Endgerät dazu eingerichtet, die Daten entgegenzunehmen und aus diesen die Kurzmitteilung zu extrahieren und in ein Ausgabeformat umzusetzen und, insbesondere auf einer Anzeigeeinheit, auszugeben.

Damit die Kommunikationspartner ISDN-Endgerät und Short-Message-Dienstzentrum erkennen, dass es sich bei den Daten um solche handelt, die eine Kurznachricht enthalten, werden die Daten (proprietär) kodiert und anschließend zwischen dem Short-Message-Dienstzentrum und dem ISDN-Endgerät bzw. in umgekehrter Richtung übertragen.

Wie schon weiter oben erwähnt, gestaltet sich die Realisierung der Erfindung besonders einfach, wenn die Daten vor der Übermittlung in ISDN-spezifische Meldungen gepackt werden und anschließend zwischen Short-Message-Dienstzentrum und dem ISDN-Endgerät übermittelt werden.

Bei einer speziellen Ausführungsform der Erfindung wird die Kurznachricht mittels des ISDN-Endgerätes eingegeben, von diesem in ein SMS-Format gebracht, anschließend in ein ISDN-spezifische Meldung eingepackt, wobei die an das Short-Message-Dienstzentrum übertragenen Daten zumindest die ISDN-Meldung enthalten. Das Short-Message-Dienstzentrum erkennt dann an Hand der vereinbarten Protokolle, dass es sich um eine Kurznachricht aus dem Festnetz handelt, entpackt diese aus der Meldung, und sendet dann diese beispielsweise mittels SS7-Signalsierung an das gewünschte Ziel weiter.

Auf die weiteren vorteilhaften Ausgestaltungsformen des erfindungsgemäßen Systems wurde bereits im Zusammenhang mit dem erfindungsgemäßen Verfahren eingegangen.

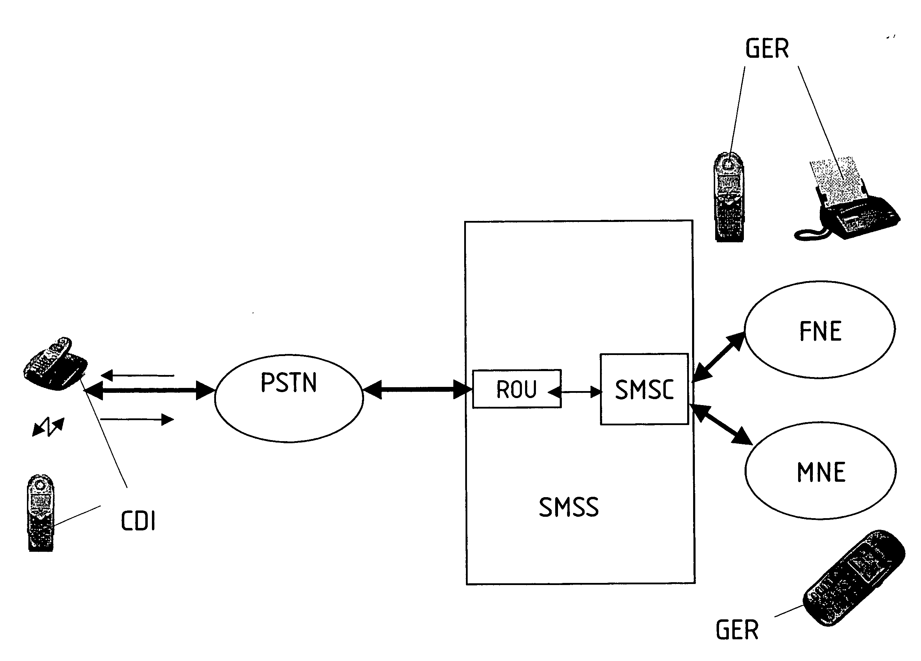

Im folgenden ist die Erfindung an Hand der Zeichnung näher erläutert. In dieser zeigt die einzige Figur eine Prinzipskizze eines Telekommunikationssystems gemäß der Erfindung.

Die Figur zeigt ein ISDN-Endgerät CDI, welches basierend auf dem D-Kanal-Protokoll an ein Telekommunikationsnetz PSTI angebunden ist. Bei dem Endgerät CDI kann es sich dabei um ein herkömmliches Endgerät oder aber auch um ein auf dem DECT-Standard basierendes Mobilfunkgerät handeln.

Die Erfindung betrifft, wie weiter oben bereits erwähnt, die Mehrzahl der ISDN-Endgeräte, nämlich jene, welche auf dem D-Kanal-Protokoll bzw. der D-Kanal-Signalisierung basieren.

Das ISDN D-Kanal-Protokoll ist entsprechend dem OSI-Referenzmodell strukturiert und durch ITU-Empfehlungen festgelegt. Die Steuerung über den D-Kanal findet in den unteren drei Schichten statt. In der Bitübertragungsschicht findet die physikalische Bitübertragung statt (16 kbit/s oder 64 kbit/s). Die Bitübertragungsschicht übernimmt dabei die Übertragung der Steuerinformationen entsprechend den ITU-T-Empfehlungen I.430 und I.431. Die wichtigsten Funktionen der Bitübertragungsschicht sind die Generierung des Bit-Taktes, die Rahmensynchronisation, die Echokompensation und die Aktivierung bzw. Deaktivierung der Endeinrichtung, wobei die Aktivierung bzw. Deaktivierung der Signalisierung und dem Verbindungsauf- bzw. -abbau dient. Die Bitübertragungsschicht überträgt die Daten der Schichten 2 und 3 in einem 48 Bit langen Rahmen und einer Bruttobitrate von 192 kbit/s zwischen der Vermittlungsstelle und den ISDN-Endeinrichtungen .

Bei der Signalisierung im D-Kanal sorgt die Sicherungsschicht für die gesicherte Übermittlung der Steuerinformationen und der eventuell im D-Kanal übertragenen paketierten Daten, entsprechend den ITU-Standards Q.920 und Q.921. Es werden unquittierte und quittierte Nachrichtenübermittlungen mit Datenpaketen , TEI-Vergabe (Terminal Endpoint Identifier ). und TEI-Rücknahme unterstützt. Die Prozedur in dieser Schicht ist das LAP-D-Protokoll. Die Nachrichten der Vermittlungsschicht des D-Kanal-Protokolls werden für die Übertragung in einen oder mehrere Schicht-2-Frames verpackt.

Diese Frames haben bestimmte Steuerelemente, um eine sichere Datenübertragung zu gewährleisten. Das Frame der Sicherungsschicht beginnt und endet jeweils mit einem Flag .Um Bitkombinationen zu vermeiden, die den Flags entsprechen, wird mit Bit-Stuffing gearbeitet und nach jeweils fünf Bits mit der Wertigkeit 1 eine 0 eingefügt. Das Adressfeld der Sicherungsschicht kann 8 oder 16 Bits lang sein. Die im Adressfeld übertragenen Adressinformationen setzten sich zusammen aus dem SAPI und dem TEI. Dabei werden den Endeinrichtungen die TEI zugeordnet, der SAPI dient als Zugangsstelle zu einem bestimmten Dienst und stellt die Beziehung zu einer Instanz in der Vermittlungsschicht her. Das 8-Bits lange Steuerfeld des Schicht-2-Frames kennzeichnet den übertragenen Frame. Diese Kennzeichnung ist abhängig davon, ob es sich um einen Befehl oder eine Antwort handelt und kann in Form einer Nummerierung des Steuer- oder Informations-Frames erfolgen oder aber als unnummeriertes Steuer-Frame. Hinter dem Steuerfeld kommt das Informationsfeld, das die Information der Vermittlungsschicht enthält. Das Informationsfeld hat eine Länge von n x 8 Bits; die maximale Länge ist 260 Oktetts. Dem Informationsfeld folgt das 16 Bits lange Prüffeld, das ein Prüfbitmuster enthält, aus dem Übertragungsfehler erkannt werden können.

In der Vermittlungsschicht werden Netzsteuerinformationen (Zeichengabe ) übertragen sowie Protokollkennung und Referenzverwaltung (Call Reference ) durchgeführt. Innerhalb der Vermittlungsschicht wird die eigentliche Benutzersignalisierung abgewickelt. Dazu gehören die Codierung der Nachrichten entsprechend den jeweiligen technischen Anforderungen, der Nachrichtenaustausch nach bestimmten Prozeduren sowie Funktionen, die sowohl zum Verbindungsaufbau und -abbau von ISDN-Verbindungen als auch zur Realisierung von ISDN-Dienstmerkmalen erforderlich sind. Den Austausch von Steuernachrichten zwischen den Endeinrichtungen und dem Anschlussknoten beschreibt das auf der Vermittlungsschicht aufsetzende Vermittlungsprotokoll nach den ITU-Empfehlungen Q.930 und Q.931. Das D-Kanal-Protokoll der Vermittlungsschicht besteht aus einem Header , der zu Beginn einen 8 Bits langen Protokolldiskriminator enthält, gefolgt von einem 4 Bits langen Feld, der CR-Länge, in dem die Länge des folgenden CR-Feldes festgelegt ist. In dem nachfolgenden Feld wird der Nachrichtentyp festgelegt. Der Protokolldiskriminator unterscheidet zwischen dem nationalen 1TR6-Protokoll und dem internationalen DSS1-Protokoll. Mit dem CR-Feld können gleichzeitig mehrere parallel laufende Signalisierungsvorgänge durch Nummerierungen unabhängig voneinander verschiedenen Anwendungen zugeordnet werden. Der Nachrichtentyp definiert die Nachrichtenfunktion. Dem Feld des Nachrichtentyps folgen die Felder der Informationselemente. Typische Informationselemente sind die Rufnummer der Quell- und Ziel-Endeinrichtungen sowie deren Subadressen und die Spezifikation des Übermittlungsdienstes.

Für solche D-Kanal-basierte Endgeräte CDI ist es nun, wie einleitend näher erläutert wurde, grundsätzlich nicht möglich, Kurznachrichten zu empfangen bzw. entgegenzunehmen, und es ist somit eine Aufgabe der Erfindung, eine Lösung für dieses Problem aufzuzeigen.

Bei einer ersten Lösung dieses Problems schickt gemäß der Erfindung das ISDN-Endgerät CDI mittels D-Kanal-Signalisierung Daten an den SMS-Server bzw. Short-Message-Dienstzentrum SMSS, der im wesentlichen aus einem Router ROU und einem Short-Message-Service-Controller SMSC besteht, wobei die notwendigen Verfahrensschritte in der Regel im wesentlichen von Router ROU durchgeführt werden. Dazu packt das entsprechend dazu eingerichtete ISDN-Endgerät CDI die Kurznachricht, die im entsprechenden Kurznachrichtenformat vorliegt, in eine ISDN-spezifische Meldung, welche dann an das Short-Message-Dienstzentrum SMSS, d.h. den SMS-Server, weitergeleitet wird.

Als ISDN-spezifische Meldungen werden Meldungen der D-Kanal-Signalisierung, d.h. insbesondere des Schicht-3-Protokolls der D-Kanal-Signalisierung, verwendet.

Beispielsweise eignet sich als ISDN-spezifische Meldung die Meldung FACILITY, welche grundsätzlich sogenannte FACILITY-Informationselemente enthält, die in der Lage sind, spezielle Informationen aufzunehmen, beispielsweise auch Kurznachrichten.

Weiters eignen sich auch die USER INFORMATION-Meldungen, die sogenannte User-to-User Informationselemente enthalten, welche ebenfalls Kurznachrichten aufnehmen können.

Hauptunterschied zwischen diesen beiden Meldungen ist vor allem, dass die FACILITY Meldungen verbindungsunabhängig ausgetauscht werden können, aber nicht müssen, während die USER INFORMATION Meldungen nur verbindungsgebunden geschickt werden können.

Grundsätzlich können aber auch andere Meldungen verwendet werden, z.B. User to User Informationselemente könnten in anderen verbindungsgebundene Meldungen, so genannten "call processing messages", aufgenommen werden (z.B. SETUP, ALERT, CONNECT, DISCONNECT usw.). Allerdings ist bei diesen Meldungen die Informationsmenge zum Teil stark eingeschränkt.

Der SMS-Server SMSS, insbesondere der Router ROU, entpackt dann die Kurznachricht aus der Meldung und leitet die Kurznachricht auf bekannte Weise an das dafür bestimmte Endgerät GER, beispielsweise über ein Mobilfunknetz oder ein Festnetz FNE weiter.

Der SMS-Informationsaustausch zwischen dem SMS-Server und einem Mobilfunkgerät basiert dabei auf der ETSI-Norm 100901, welche die Norm für den SMS-Informationsaustausch zwischen einem SMS-Server und einem Mobilfunkgerät darstellt.

Bei einer weiteren Möglichkeit nach der Erfindung, die sich sowohl für die Übermittlung von Kurznachrichten von einem D-Kanal-Endgerät CDI weg als auch zu diesem hin als Empfänger eignet, werden von dem Endgerät CDI an den SMS-Server SMSS über DSS1-(Schicht-3)-Meldungen wie FACILITY oder USER INFORMATION mit proprietär kodierten Daten an den SMS-Server übermittelt. Diese Daten enthalten nun auch die Kurznachricht an sich, jedoch noch nicht im entsprechenden SMS-Format, mit dem sie entsprechend dem SMS-Protokoll an eine Gegenstelle übermittelt werden können.

Damit die Kommunikationspartner erkennen, worum es sich handelt, müssen die Daten kodiert sein. Die Daten werden dabei proprietär kodiert, d.h. dass das Protokoll betreffend den Datenaustausch zwischen dem SMS-Server und einem Endgerät zwar auf dem DSS1-Protokoll aufsetzt, allerdings wird eine eigene Möglichkeit benützt, bei der die Daten von der Vermittlungsstelle transparent weitergegeben werden, jedoch die beiden Endpunkte erkennen können, dass es sich dabei um Kurznachrichten handelt.

Weiters ist es günstig, wenn die Kurznachricht mittels des Zentralzeichenkanal-Signalisierungssystems Nr. 7 an ein Endgerät übermittelt wird. Damit die Kurznachricht auch mobilen Endgeräten gesendet werden kann, ist es weiters zweckmäßig, wenn das Signalisierungssystem Nr. 7 um einen Mobilfunkanwendungsanteil (*Mobile Application Part,* MAP) erweitert ist, sodass die Kurznachricht an ein dem empfangenden Endgerät zugeordnetes Short-Message-Dienstzentrum übermittelt werden kann. Auf diese Signalisierungsweise werden die SMS-Informationen zwischen den Vermittlungsstellen transportiert.

Konkret wird dabei die SMS-betreffende Information in dem MAP-Anteil gepackt und über die SCCP-Meldungen (Steuerteil für Zeichengabetransaktionen) an den Empfänger weitergeleitet.

Durch diese Signalisierung werden die SMS Informationen zwischen den Vermittlungsstellen transportiert, wobei es sich im wesentlich um ETSI 100 901 normierte Informationselemente, die manchmal auch als SMS-Meldungen bezeichnet werden, handelt.

Laut ETSI 100 901, Kapitel 9.2.2.4, hat beispielsweise die Meldung SMS-COMMAND die folgende Struktur:
- Message Type (2 bits)
- User Data Header Indication (1 bit)
- Status Report Request (1 bit)
- Message Reference (Integer)
- Protocol Identifier (octet)
- Command Type (octet)
- Message Number (octet)
- Destination address (2-12 octet)
- Command Data Length (octet)
- Command Data (max 146 octet)

Bei den Command Data handelt es sich dabei um die eigentliche SMS-Nachricht, die restlichen Elemente dienen lediglich zur Steuerung.

Diese Informationen müssen nun erfindungsgemäß beispielsweise in einem User-to-User-Informationselement kodiert werden. Eine solche Möglichkeit entsprechend der ETSI-Norm ist im folgenden angegeben:
- Informationselement Identifier ( 1 byte, Wert 0x7E - hexadezimale Wert für das User to User Informationselement
- Length of Informationselement (1 byte wert 1-128 dezimal)
- Protokol Discriminator (hier eignet sich am besten 00 -> user coded)
- es folgt ein weiteres Byte, das proprietär kodiert wird und angibt, dass es sich um eine SMS handelt, und gegebenenfalls, ob noch weitere Meldungen zu dieser SMS hinzukommen.
- ab hier folgt die Meldung SMS-COMMAND wie oben angegebeb oder ein Teil davon

Gemäß der Erfindung wird es somit möglich, Kurznachrichten auch an D-Kanal-basierte ISDN-Endgerät zu senden oder mit diesen wegzuschicken. Bei der ersten besprochenen Ausführungsform ist das ISDN-Gerät entsprechend dazu eingerichtet, die notwendigen Schritte vorzunehmen, damit eine Kurznachricht ausgesendet werden kann.

In den meisten Fällen noch günstiger ist die zweite Lösung, bei der das Short-Message-Dienstzentrum, und in diesem speziell der Router, dazu eingerichtet ist, die entsprechenden Schritte durchzuführen.

Dazu nimmt der Router kurz gesprochen Meldungen von dem ISDNgerät entgegen, "entpackt" diese und schickt die Kurznachricht dann wie bekannt an das gewünschte Ziel weiter.

Damit die Erfindung auch in die "umgekehrte" Richtung funktioniert, d.h., dass mit dem ISDN-Endgerät auch Kurznachrichten empfangen werden können, ist der Router wie oben besprochen weiters noch dazu eingerichtet, Kurznachrichten in eine ISDN-spezifische Meldung zu verpacken und diese dann per D-Kanal-Signalisierung an das ISDN-Endgerät weiterzuleiten, welches dann die Meldung entpackt und die Kurznachricht ausgibt.

Auf diese Weise wird es möglich, zwischen verschiedensten Konstellationen von Endgeräten, auch zwischen zwei ISDN-Endgeräten im Festnetz, Kurznachrichten auszutauschen.

## Patentansprüche

1. Verfahren zur Übermittlung einer Nachricht von einem ersten zu einem zweiten Telekommunikations-Endgerät (CDI), von denen zumindest eines an ein leitungsgebundenes Telekommunikationsnetz (PSTN) angeschlossen und als ISDN-Endgerät ausgebildet ist,
**dadurch gekennzeichnet, dass**
a) die Nachricht mit einem ersten Telekommunikations-Endgerät als Kurznachricht eingegeben wird,
b) über D-Kanal-Signalisierung Daten an ein Short-Message-Dienstzentrum (SMSS) übertragen werden, wobei die Daten zumindest die Kurznachricht enthalten,
c) von dem Short-Message-Dienstzentrum (SMSS) die mittels D-Kanal-Signalisierung übertragenen Daten entgegengenommen und zumindest die Kurznachricht an ein zweites Telekommunikations-Endgerät übertragen wird, und
d) die vom Short-Message-Dienstzentrum erhaltene Kurznachricht im zweiten Telekommunikations-Endgerät in ein Ausgabeformat umgesetzt wird und, insbesondere auf einer Anzeigeeinheit, ausgegeben wird.

2. Verfahren nach Anspruch 1,
**dadurch gekennzeichnet, dass** die Übertragung in Schritt c) unter Verwendung der Schicht 3 des D-Kanal-Protokolls durchgeführt wird.

3. Verfahren nach Anspruch 1 oder 2,
**dadurch gekennzeichnet, dass** die Daten (proprietär) kodiert und anschließend an das Short-Message-Dienstzentrum (SMSS) übertragen werden.

4. Verfahren nach einem der Ansprüche 1 bis 3,
**dadurch gekennzeichnet, dass** die Kurznachricht mittels des Zentralzeichenkanal-Signalisierungssystems Nr. 7 an ein Endgerät übermittelt wird.

5. Verfahren nach Anspruch 4,
**dadurch gekennzeichnet, dass** das Zentralzeichenkanal-Signalisierungssystems Nr. 7 um einen Mobilfunkanwendungsanteil (*Mobile Application Part,* MAP) erweitert ist, und die Kurznachricht an ein dem empfangenden Endgerät zugeordnetes Short-Message-Dienstzentrum übermittelt wird.

6. Verfahren nach einem der Ansprüche 1 bis 5,
**dadurch gekennzeichnet, dass** die Daten vor Schritt b) in ISDN-spezifische Meldungen gepackt werden und anschließend an das Short-Message-Dienstzentrum übermittelt werden.

7. Verfahren nach Anspruch 1 oder 2,
**dadurch gekennzeichnet, dass** die Kurznachricht in Schritt a) mittels eines ISDN-Endgerätes (CDI) eingegeben wird, vor Schritt b) die Kurznachricht mittels des ISDN-Endgerätes in ein SMS-Format gebracht, anschließend in eine ISDN-spezifische Meldung eingepackt wird, und die in Schritt b) an das Short-Message-Dienstzentrum (SMSS) übertragenen Daten zumindest die ISDN-Meldung enthalten.

8. Verfahren nach Anspruch 6 oder 7,
**dadurch gekennzeichnet, dass** eine FACILITY-Meldung verwendet wird.

9. Verfahren nach Anspruch 6 oder 7,
**dadurch gekennzeichnet, dass** eine USER INFORMATION-Meldung verwendet wird.

10. Telekommunikationssystem zur Übermittlung einer Nachricht von einem ersten zu einem zweiten Telekommunikations-Endgerät, von denen zumindest eines an ein leitungsgebundenes Telekommunikationsnetz (PSTN) angeschlossen und als ISDN-Endgerät (CDI) ausgebildet ist, mit zumindest einem Short-Message-Dienstzentrum (SMSS) zur Übermittlung bzw. Entgegennahme von Kurznachrichten von einem bzw. zu einem an das Kommunikationsnetz (PSTN) angeschlossenen Endgerät (CDI),
**dadurch gekennzeichnet, dass**
die mit einem Telekommunikations-Endgerät als Kurznachricht eingegebene Nachricht in Daten verpackt wird, welche zwischen dem Short-Message-Dienstzentrum (SMSS) und dem ISDN-Endgerät mittels D-Kanal-Signalisierung übertragen werden.

11. Telekommunikationssystem nach Anspruch 10,
**dadurch gekennzeichnet, dass** das ISDN-Endgerät (CDI) dazu eingerichtet ist, die die Kurznachricht enthaltenden Daten an das Short-Message-Dienstzentrum (SMSS) mittels D-Kanal-Signalisierung zu übermitteln, das Short-Message-Dienstzentrum (SMSS) dazu eingerichtet ist, die Daten entgegenzunehmen, die Kurznachricht aus den Daten zu extrahieren und an ein zweites Telekommunikations-Endgerät zu übertragen, wo die vom Short-Message-Dienstzentrum (SMSS) erhaltene Kurznachricht in ein Ausgabeformat umgesetzt wird und, insbesondere auf einer Anzeigeeinheit, ausgegeben wird.

12. Telekommunikationssystem nach Anspruch 10,
**dadurch gekennzeichnet, dass** das Short-Message-Dienstzentrum (SMSS) dazu eingerichtet ist, die die Kurznachricht enthaltenden Daten an das ISDN-Endgerät (CDI) zu übermitteln, und das ISDN-Endgerät (CDI) dazu eingerichtet ist, die Daten entgegenzunehmen und aus diesen die Kurzmitteilung zu extrahieren und in ein Ausgabeformat umzusetzen und, insbesondere auf einer Anzeigeeinheit, auszugeben.

13. Telekommunikationssystem nach einem der Ansprüche 10 bis 12,
**dadurch gekennzeichnet, dass** die Übertragung der Daten unter Verwendung der Schicht 3 des D-Kanal-Protokolls erfolgt.

14. Telekommunikationssystem nach einem der Ansprüche 10 bis 13,
**dadurch gekennzeichnet, dass** die Daten (proprietär) kodiert und anschließend zwischen dem Short-Message-Dienstzentrum (SMSS) und dem ISDN-Endgerät (CDI) bzw. in umgekehrter Richtung übertragen werden.

15. Telekommunikationssystem nach einem der Ansprüche 10 bis 14,
**dadurch gekennzeichnet, dass** die Kurznachricht mittels des Zentralzeichenkanal-Signalisierungssystems Nr. 7 an ein Endgerät übermittelt wird.

16. Telekommunikationssystem nach Anspruch 15,
**dadurch gekennzeichnet, dass** das Zentralzeichenkanal-Signalisierungssystems Nr. 7 um einen Mobilfunkanwendungsanteil (*Mobile Application Part,* MAP) erweitert ist.

17. Telekommunikationssystem nach einem der Ansprüche 10 bis 16,
**dadurch gekennzeichnet, dass** die Daten vor der Übermittlung in ISDN-spezifische Meldungen gepackt werden und anschließend zwischen Short-Message-Dienstzentrum und dem ISDN-Endgerät übermittelt werden.

18. Telekommunikationssystem nach einem der Ansprüche 10 bis 17,
**dadurch gekennzeichnet, dass** die Kurznachricht mittels des ISDN-Endgerätes (CDI) eingegeben, von diesem in ein SMS-Format gebracht, anschließend in eine ISDN-spezifische Meldung eingepackt wird, wobei die an das Short-Message-Dienstzentrum (SMSS) übertragenen Daten zumindest die ISDN-Meldung enthalten.

19. Telekommunikationssystem nach Anspruch 17 oder 18,
**dadurch gekennzeichnet, dass** eine FACILITY-Meldung verwendet wird.

20. Telekommunikationssystem nach Anspruch 17 oder 18,
**dadurch gekennzeichnet, dass** eine USER INFORMATION-Meldung verwendet wird.

21. ISDN-Endgerät zur Verwendung in einem Verfahren nach einem der Ansprüche 1 bis 9 bzw. in einem Telekommunikationssystem nach einem der Ansprüche 10 bis 20.
